# EUROPEAN PATENT SPECIFICATION

(11) **EP 2 343 515 B1**
(45) Date of publication and mention of the grant of the patent: **23.09.2020**
(21) Application number: 10150450.4
(22) Date of filing: 11.01.2010
(51) Int. Cl.: G01F 1/66

(54) **FLOWMETER WITH VARIABLE OPERATION CONDITIONS**
DURCHFLUSSMESSER MIT VARIABLEN BETRIEBSZUSTÄNDEN
DÉBITMÈTRE DOTÉ DE CONDITIONS DE FONCTIONNEMENT VARIABLES

(43) Date of publication of application: 13.07.2011
(73) Proprietor: KAMSTRUP A/S, 8660 Skanderborg (DK)
(72) Inventor: Honoré, Janus, DK-9380, Vestbjerg (DK)
(74) Representative: Plougmann Vingtoft a/s

(56) References cited:
- EP-A1- 0 846 936
- WO-A1-00/46583
- DE-A1- 19 942 138
- US-A- 3 625 057
- US-A- 4 052 896
- US-A- 4 227 407
- US-A- 4 468 971
- US-A- 5 012 449
- US-B1- 6 487 916

## Description

### FIELD OF THE INVENTION

The present invention relates to flowmeter for measuring a flow value. In particular the invention relates to an ultrasonic transit time flowmeter for measuring a flow value representing a consumed quantity.

### BACKGROUND OF THE INVENTION

A consumption meter converts a measured quantity value to a consumed quantity. As an example, an ultrasonic flow meter may measure a time delay between counter-propagating ultrasonic waves in a medium flow in order to determine a corresponding consumption of the medium, such as a consumption of hot or cold water. In a typical ultrasonic flowmeter, ultrasonic transducers for generating and detecting ultrasonic signals are placed so that the generated signals can propagate through the medium flow. In a typical determination of a fluid flow, ultrasonic signals from the two ultrasonic transducers are emitted in counter-propagating directions. Signals propagating downstream propagate faster than signals propagating upstream, and the flow rate can be determined by measuring difference in arrival time of the emitted signals at the other transducers. The flowmeter comprises electronic circuitry connected to the transducers for driving the transducers, often referred to as generator electronics, as well as electronic circuitry connected to the transducers for receiving the detected transducer signals, often referred to as receiver electronics. In known flowmeters, the generator circuit is optimized for outputting a fixed driving signal to the transducers, and the receiver circuit is optimized for a specific amplification gain. The determination of the flow rate, as well as the outputting of the flow rate may be done by an analogue or digital unit electrically connected to the generator electronics and the receiver electronics.

The requirements of a modern consumption meter are enormous. The consumption meter should be able to operate in a large dynamic range in terms of flow velocities, such as a dynamic range of up to 1:250, it should be able to operate in a large temperature range, such as ranging from 5°C - 130°C, it should be able to operate stable for many years, with a target lifetime of more than 15 years, all calibrations should be done at the factory prior to installation of the meter, and the price of the flow meter should be low. Due to strict governmental regulations, even under these strict conditions, the overall error margin should be well below a few percent with virtually no zero flow. Nevertheless, modern consumption meters based on transit time ultrasonic flow measurements may fulfil these strict requirements. In this context, zero flow describes the situation where the medium is not flowing, but a flow of the medium is nevertheless detected. The origin of such detected flow at zero flow conditions are imperfections in the electronic components so that a measurement in one direction and a measurement in the other direction does not yield the same transit time which leads to an artificially measured flow.

One paramount condition in relation to fulfilling the strict requirements is a very strict compliance to the principle of reciprocity of the electronic arrangement of the flowmeter.

The principle of reciprocity states, that applying a voltage to an input of a passive linear network results in a current at the output equal to the current produced when the input and output are interchanged. Correctly applied, this means that in an ultrasonic flow meter with two piezoelectric transducers facing each other, the received signal will be the same independent of the direction of the signal. The net result of this will be no, or virtually no, detectable time-of-flight difference between signals counter-propagating through the meter at zero flow.

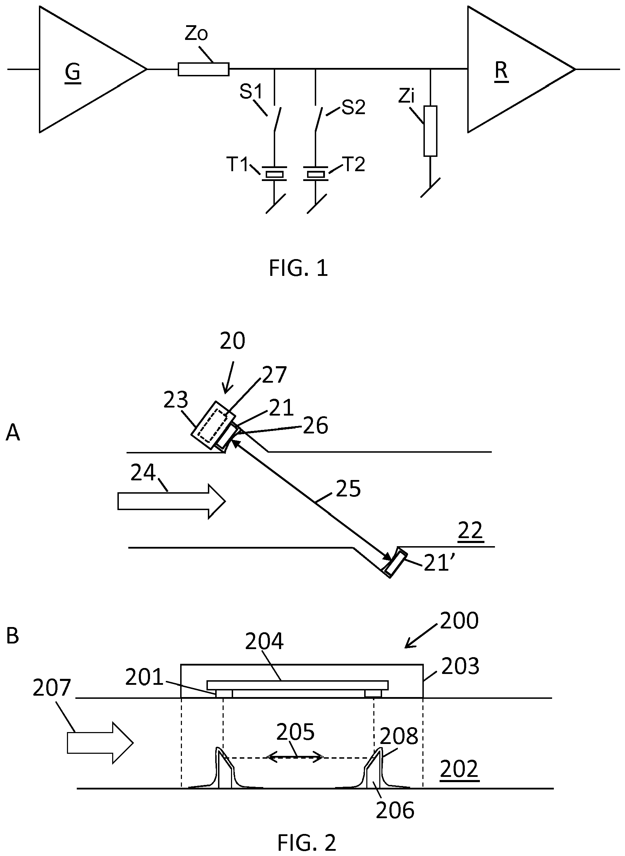

An example of an ultrasonic flowmeter which is reciprocal to a very high degree is disclosed in EP 0 846 936. Further reference to the electronic arrangement of this flowmeter is provided in connection with FIG. 1.

DE 199 42 138 A1 discloses an ultrasonic flow meter which utilizes an amplitude modulated signal for determining the transit time of the ultrasonic signal.

US 4,468,971 discloses an ultrasonic flow meter for measuring the flow rate of clean and dirty industrial process fluids. The circuit utilizes an output limited amplifier and sample and hold circuits to compensate for the attenuation of the source beam by various fluids and to obtain improved operability for both clean fluids and dirty fluids.

The typical transit times of the ultrasonic signals through the medium are very low, typically in the microsecond range, and particularly the differences in transit times between the two directions are very low, which may be in the nanosecond or even the picosecond range. Therefore the transit times need to be measured with a very high accuracy; any asymmetries in the electronic characteristics of either the generator circuit or the receiver circuit seen by the transducers in the emitter and receiver circuit will lead to inaccuracies in the measured transit times. With these low transit times and transit time differences, even parasitic impedances of the circuitry needs to be controlled.

### SUMMARY OF THE INVENTION

The strict requirements of reciprocity of a consumption meter render it difficult to provide a versatile flowmeter which can operate with a high precision under changing conditions. In particular, the inventor of the present invention has realized that the transducers, measuring tubes, etc. risk to be coated during operation which may influence the ultrasonic signals. A coating on transducers or measuring tubes may decrease and/or distort the signal. Also such conditions as variations in the measured flow may influence the optimal operational settings of the flowmeter. In general it would be advantageous to provide a consumption meter which allows optimization without changes to the circuitry in relation to various, possible conflicting criteria, such as optimization with respect to operational conditions, energy consumption, measuring precision, etc. The consumption meter should nevertheless be reciprocal, or at least expose a very high degree of reciprocity, in the overall electrical design. Moreover, it is an object of the present invention to provide an alternative to the prior art.

In a first aspect of the invention, there is provided an ultrasonic flowmeter comprising:
- at least two ultrasonic transducers arranged for transmission and receipt of ultrasonic signals in opposite directions across a measuring distance;
- a generator circuit for generating drive signals to the at least two ultrasonic transducers, the generator circuit having a generator output;
- a receiver circuit for receiving signals from the at least two ultrasonic transducers, the receiver circuit having a receiver input and a receiver output, the generator output being connected to the receiver input by an electric signal path; and
- at least two transducer switches being operable for alternating connection of the ultrasonic transducers to the signal path;
wherein the receiver circuit comprises a receiving amplifier positioned between the receiver input and the receiver output, so that the receiver input is connected to the input of the receiving amplifier and the output of the receiving amplifier is connected to the receiver output; and
wherein the generator circuit is adapted for generating drive signals with variable amplitude or the receiver circuit is adapted to change the amplification gain of the receiving circuit.

The flowmeter may in embodiments be part of a consumption meter for measuring a medium flow through a flow passage connected to the flowmeter. The consumption meter may be used for measuring a consumed quantity of the medium, such as a consumed quantity of hot or cold water, however the consumption of any medium measurable with a consumption meter in accordance with embodiments of the present invention can be measured. The consumption meter may be a legal meter, i.e. a meter which is subdued to regulatory demands. Such regulatory demands may be demands to the precision of the measurements.

In the present context, the opposite directions are typically two opposite directions. However, also e.g. a triangular setup is contemplated, as well as or other setups where a component of the vectors representative of the ultrasonic signal propagation are in opposite directions.

It is important, that the flowmeter electronics is reciprocal to a very high degree. The flowmeter in accordance with embodiments of the present invention comprises separate but electrically connected generator and receiver electronics. In a flowmeter of this type, key elements in achieving a high degree of reciprocity is the connection of the generator output and the receiver input by the electric signal path, so that only a single driver circuit and a single receiver circuit are present, in combination with a careful control of the output impedance of the driver circuit and the input impedance of the receiver circuit. Thus the transducers share generator circuit and receiver circuit. In embodiments, the electric signal path is a single path. The electric path may be unbroken. The electric path may be un-switched, i.e. no switches are placed in the path between the generator output and the receiver input. Electronic components may be present in the electric paths. However, such components should carefully be selected to expose a high degree of linearity. The control of the output impedance of the driver circuit and the input impedance of the receiver circuit may be such that any differences in the output impedance and/or the input impedance are very low between the two situations when the transducers act as emitter and when the transducers act as receiver. The impedance difference between the two situations should advantageously be below 1%, and preferable even lower, such as below 0.5% or even below 0.1%.

By providing a flowmeter where the drive signals can be generated with variable amplitude or the receiver circuit is adapted to change the amplification gain, a versatile flowmeter is provided, which can be adjusted to optimize or at least improve the performance in accordance with specific operation conditions, such as changing flow conditions, changing signal levels, a desired precision level, a desired energy consumption level, e.g. to maximize battery lifetime, etc. This is a great advantage, since it provides a flowmeter which can be kept in operation even if the operation conditions changes by modifying the driving or receiver operation settings. Disassembly and subsequent assembly of the flowmeter can thus be avoided. In embodiments, either one of, or both of, the amplitude of the drive signals and amplification gain of the receiving circuit is adapted to be changed.

A flowmeter comprises control electronics to control the operation of the generator circuit, the transducer and the receiver, as well as other controllable components. Such control electronics are typically implemented by a dedicated application specific integrated circuit (ASIC), also referred to as a flow ASIC. A further advantage of embodiments of the present invention lies in that by being able to change the amplification gain of the receiving circuit, the transducers can be operated using signals with an operational voltage level which is higher than the voltage level supported by the ASIC. As a consequence, a low voltage ASIC platform can be used to implement the control of the flowmeter. Thus a flowmeter with lower power consumption can be provided. To this end, it is noted that the specific voltage of so-called low-voltage electronics varies with time as well as with technical field. In the current context a low voltage platform may support peak voltages lower than 5 volts, such as lower than 3.7 volts (which is the current standard), or even lower.

Another advantage of being able to separate the ASIC platform from the specific transducer signal level is that the ASIC platform may be shared by different flowmeters with different transducer arrangements irrespective of the operational voltage level of the transducers.

Specifically, the ability of using variable amplification gain of the receiving circuit, renders it is possible to drive the transducers with high amplitude signal even in a low voltage environment of the receiving circuitry. This is particularly relevant in large flowmeters where the distance in the flow tube requires a signal of a given size, and where the signal is in risk of diminishing over time due to coating which grow in the measuring tube. In a situation where the received signal amplitude decreases over time, the measuring accuracy will normally decrease as well, since the decreasing signal amplitude will introduce an increased variation from measurement to measurement. By ensuring that the received signal is sufficiently powerful to enable proper signal detection a high measuring accuracy may be ensured.

In an advantageous embodiment, the ultrasonic flowmeter comprises means for determining a condition signal indicative of an operation condition, and wherein the generator circuit is adapted for generating drive signals with variable amplitude or the receiver circuit is adapted to change the amplification gain of the receiving circuit in response to the condition signal. By use of a condition signal, the control of the generator and/or the receiving circuit can be made automatic or semi-automatic.

In an advantageous embodiment, the amplitude of the drive signals is varied by varying the supply power to an amplifier comprised in the generator circuit. This way of controlling the amplitude of the driving signal does not influence the output impedance of the generator circuit, and therefore does not jeopardize the reciprocity of the electronic circuitry.

In an advantageous embodiment, the input of the receiving amplifier and the output of the receiving amplifier are connected by a feedback connection comprising a variable impedance in series. By proper control of the variable impedance of the feedback connection, the receiving circuit does not influence, or only influences to a small degree, the input impedance of the receiving circuit.

In an advantageous embodiment, such proper control of the variable impedance is provided by a parallel connection of a first impedance and a switched second impedance. Specifically, the feedback connection may comprise a first impedance in series and at least one parallel connection across this first impedance, where the at least one parallel connection comprises a second impedance and an amplifier switch in series with the second impedance, and where the amplifier switch is operable to couple in and out the second impedance so as to change the amplification gain of the receiving circuit. Such an arrangement will not or only to a very small degree influences the input impedance of the receiver circuit, and therefore not jeopardize the reciprocity of the overall reciprocity of the electronic system.

In advantageous embodiments, two or more parallel connections may be used, each parallel connection comprising an individually controllable amplifier switch to couple in and out the impedance of the parallel connection. Such an embodiment is an advantageous implementation of a receiver circuit with a great flexibility in the amplification gain, but which still not or only to a very small degree influences the input impedance of the receiver circuit.

In advantageous embodiments, the switches are semiconductor switches, possibly of the FET-type. Such switches can be provided with a fast response time and with large degree of linearity, therefore not jeopardizing the overall reciprocity of the electronic system. Relays or other analogue switches can also be used. However, analogue relays are impeded by slow response times and high power consumption. In general any type of switches may be used, as long as they do not jeopardize the overall reciprocity of the electronic system.

In an advantageous embodiment, the amplifier switch or switches is/are operable to be closed during driving of the ultrasonic transducers and open during reception of signal from the ultrasonic transducers. The use of a switch introduces nonlinearity in the electronic circuitry. This nonlinearity will influence the reciprocity. By careful design of the electronic circuit, the nonlinearity introduced by a switch need not be a problem. When closing the amplifier switch/switches only during driving of the transducers, the nonlinearity of the switch/switches is not critical, since any nonlinearity introduced from the presence of the one or more switches will only affect the linearity of the receiver circuit and not the linearity of the input impedance of the receiver circuit.

In advantageous embodiments, the control of the amplitude of the drive signals or the amplification gain of the receiving circuit is based on a condition signal. A number of different types of conditions signals can be used as exemplified in the section Description of embodiments. In general, the term condition signal is to be construed broadly as a signal suitable for indicating by any means any type of condition or condition change.

In particular, the condition signal can be based on various inputs, such as input from probe signals at various locations in the electronic circuitry as well as, or in combination with, input based on output from a processing unit, such output may be in the form of a processed signal or value.

In an embodiment, a measurement is based on generating a series of ultrasonic pulses and measuring the transit time difference between counter propagating pulses. The number of pulses, as well as the time between consecutive measurements may be determined based on the processed signal or value. For example, if the detected measurement accuracy is above a given level, the time between consecutive measurements may be increased. By performing few measurements, the flowmeter consumes less power.

In a second aspect of the invention a method of operating an ultrasonic flowmeter is presented. The flowmeter may be a flowmeter according to the first aspect of the invention. The method comprises generating drive signals with variable amplitude and/or change the amplification gain of the receiving circuit.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE FIGURES

Embodiments of the invention will be described, by way of example only, with reference to the drawings, in which
FIG. 1 schematically illustrates an example of an electronic diagram for an ultrasonic flowmeter of the prior art;
FIG. 2 schematically illustrates examples of ultrasonic flowmeters;
FIG. 3 illustrates a general block diagram of components of an ultrasonic flowmeter;
FIG. 4 illustrates a schematic circuit diagram of central components of an embodiment of the receiver circuit;
FIG. 5 schematically illustrates alternative embodiments of the feedback connection illustrated in FIG. 4;
FIG. 6 illustrates an embodiment of important components of an ultrasonic flowmeter; and
FIG. 7 schematically illustrates a flow diagram which shows general steps which may be performed in connection with a determination of the flow rate.

### DESCRIPTION OF EMBODIMENTS

FIG. 1 schematically illustrates an example of an electronic diagram for an ultrasonic follow meter generally disclosed in EP 0 846 936, the circuit disclosed therein, is reciprocal to a very high degree. The diagram illustrates a generator G having output impedance Zo, switches S1 and S2 for enabling and preventing electrical connection to the transducers T1 and T2. The generator is directly electrically connected to a receiver R having input impedance Zi. For a setup of this type, by ensuring that the generator can be operated to alternatively output a driving signal for the transducer in question without altering the output impedance Zo between the two states (i.e. one state with generator output and one state without), the impedance seen from the transducer is the same independently of whether the transducers T1 and T2 act as transmitter or receiver of ultrasonic signals and no demands are put on the receiving and the transmitting circuits in relation to the output and input impedances, respectively.

FIG. 2 schematically illustrates examples of ultrasonic flowmeters for determining a consumed flow 24, 207, or a value representing a consumed flow. FIG. 2A schematically illustrates a flange mounted flowmeter 20, this type of flowmeter is typically used in connection with in large measuring tubes 22. The flowmeter comprises two transducers 21, 21' oppositely mounted in flanges of the measuring tube 22. The flowmeter 20 comprises a housing 23 encapsulating the electronic circuitry 27, typically in the form of one or more PCB, with such components attached as battery, antenna and display (not shown). The electronic circuitry is in electrical connection with the two transducers 21, 21' for emitting and detecting oppositely propagating ultrasonic signals 25. FIG. 2B schematically illustrates a flowmeter 200 mounted in a measuring tube 202. The flowmeter 200 comprises a housing 203 encapsulating the electronic circuitry 204. The electronic circuitry 204 is in electrical connection with the two transducers 201 emitting and detecting oppositely propagating ultrasonic signals 205. The ultrasonic signals 205 are directed by use of protruding mirrors 206.

A problem with flowmeters which are exposed to liquids is that dirt may grow to form coatings 26, 208 on the inside of the tube 22, 202 and in particular at bends and other protrusions. While only the coatings indicated with reference numerals 26 and 208 are shown, coating layers may also be present elsewhere, such as a general layer on the inside of the tube surface. A coating will effectively damp and possibly distort the emitted signals. Coating will typically grow slowly, but over time the amplitude of the detected signal may decrease. In known flowmeters, the amplitude of drive signals of the generator is constant at a preset level for the given model. One known solution to the coating problem is to ensure that the amplitude of the drive signal is sufficiently large to ensure that the emitted ultrasonic signals penetrate a coating layer of a given size. However, the need for a large amplitude of the drive signal may hamper low-voltage implementation of the flow ASIC. Embodiments of the present invention circumvent this problem by being able to adjust the amplifier gain of the receiving circuit. Using this solution, however, may be energetically inefficient, since the drive signals are overcompensated in a large period of the flowmeters life, or since the receiver electronic may be implemented with electronic components which support a high voltage level. Embodiments of the present invention circumvent this problem by not adjusting the drive signals until a signal with large amplitude may be needed. The flowmeter may further comprise or be connected to additional components, such as a pair of temperature sensors, one for measuring the temperature of the medium of the inflow and one for measuring the temperature of the medium of the outflow. From the temperature difference a consumed energy quantity can be calculated. The medium may typically be water or water with additives. However the flow of other types of media may also be determined by use of a flowmeter in accordance with embodiments of the present invention.

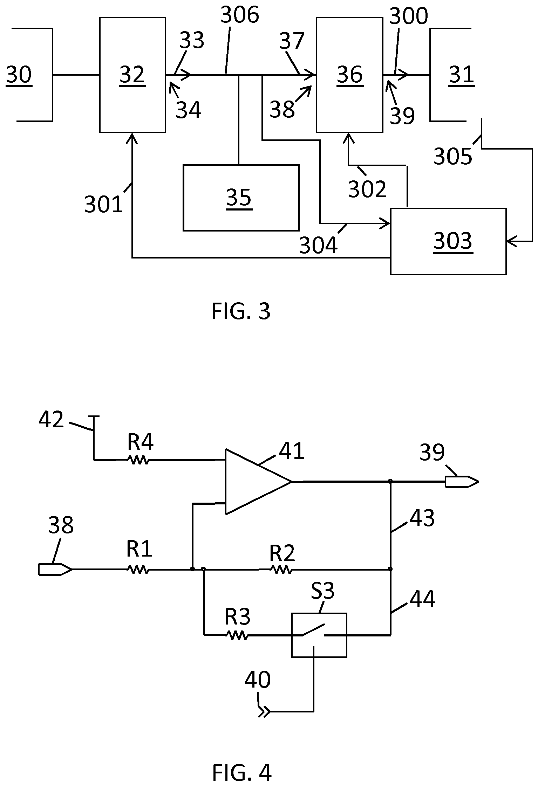

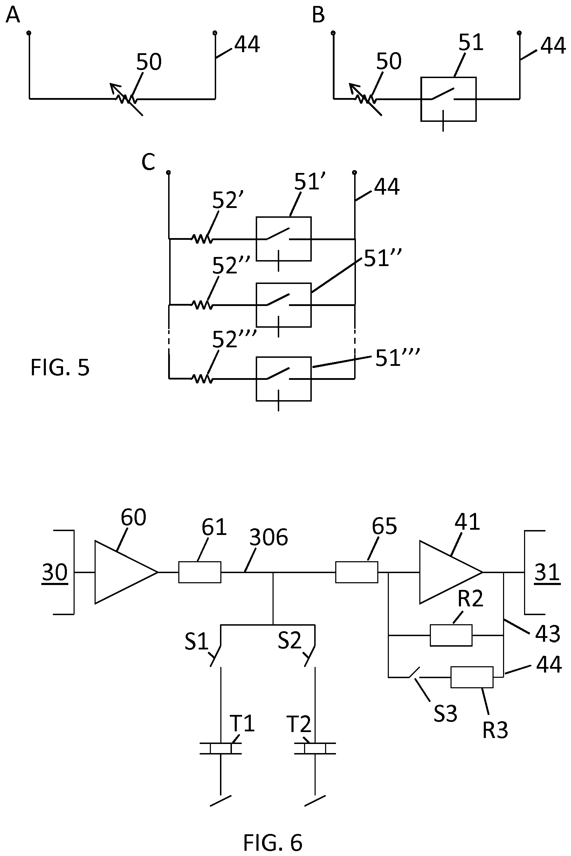

FIG. 3 illustrates a general block diagram of components of an ultrasonic flowmeter in accordance with embodiments of the present invention. The figure illustrates a driver ASIC 30 and a receiver ASIC 31 as functional units connected to a generator circuit 32 for generating drive signal 33 outputted at a generator output 34 to the at least two ultrasonic transducers 35. The ultrasonic transducers are schematically illustrated by a function block 35. In general, the at least two ultrasonic transducers are arranged for transmission and receipt of ultrasonic signal in opposite directions across a measuring distance, as illustrated in FIG. 2. The transducers are operable for alternating connection of the ultrasonic transducers to the signal path. In an embodiment, this is implemented by means of at least two transducer switches, where each ultrasonic transducer is connected to the electric signal path via at least one transducer switch. Such switches are not illustrated in FIG. 3. However, FIG. 6 illustrates an embodiment using transducer switches.

FIG. 3 further illustrates a receiver circuit 36 for receiving signals 37 from the ultrasonic transducers 35. The receiver circuit has a receiver input 38 and a receiver output 39. The generator output 34 is connected to the receiver input 37 by an electric signal path 306. In embodiments, the signal path is a direct un-switched electrical path.

The receiver circuit 36 comprises a receiving amplifier positioned between the receiver input 38 and the receiver output 39, as illustrated in FIG. 4.

The generator circuit is adapted for generating drive signals 33 with variable amplitude or/and the receiver circuit 36 is adapted to change the amplification gain of the receiving circuit, thereby outputting signals 300 with variable amplification. It is within the capability of the skilled person to transfer the teaching of FIG. 3 to true operational signals as detectable in an operating flowmeter.

In an advantageous embodiment, the flowmeter further comprises means for determining a condition signal indicative of an operation condition, and wherein the generator circuit is adapted for generating drive signals with variable amplitude or the receiver circuit is adapted to change the amplification gain of the receiving circuit in response to the condition signal. The conditional signal may be input into the generator circuit 32 and the receiver circuit 36 by means of input signals 301, 302.

In an embodiment, the generator circuit comprises an amplifier for amplifying the amplitude of the generated drive signals. The input signal 301 to the generator circuit 32 may in an embodiment be a signal which determines the supply power to the amplifier. The input signal may in embodiments be a signal to increase or decrease or even to set the supply power in order to adjust the output amplitude of the drive signal. Typical drive signals are in the range of 3 to 18 volt. In embodiments, the output amplitude of the drive signal can be adjusted within the operational range of the generator, such as within any value between the 3 and 18 volts. The receiver circuit may further comprise or be connected a processing means (not shown). The processing means may be implemented by or connected to the receiver ASIC 31. The processing means is capable of, based on the received signals, to calculate a consumed quantity of the flowing medium. Moreover, even though the driver ASIC 30 and the receiver ASIC 31 are illustrated as separate units, the functionality of the driver and the receiver ASICS may be implemented by a shared ASIC which is capable of a plurality of functions.

In an embodiment, the signal received from the transducers is monitored. The monitoring may be based on monitoring the signal 304 at a point on the signal path after the transducers 35, but before the receiver input 36. Such a monitoring may survey a measure of the signal strength. As an example, the average signal strength may be extracted and monitored. In a situation where the average signal strength falls below a given level, this is taken as an indication of a coating layer of a given thickness, and that the drive signal should be raised or that the amplification gain should be raised. The monitoring may be done by a functional monitoring unit 303, possibly implemented by a processing means comprised in or connected to the ASIC 31

The monitoring unit 303 may further implement means for determining the condition signal 301, 302 to be input to the generator circuit 32 and/or the receiver circuit 36 to adjust the drive signals and/or the amplification gain in response to the condition signal.

In other embodiments, the signal received from the transducers is processed by a processing means, e.g. implemented by or connected to the ASIC 31, and where the proceeded signal is monitored. The processing means may generate a processed signal 305 or value to be input into the monitoring unit 303 in order to generate the condition signal 301, 302 based on the processed signal or value.

The processed signal or value may be based on a statistical analysis of the signal received from the receiver output. For example, the transit time may be determined and the standard deviation of a series of determined transit times may be determined. The monitoring unit may implement an algorithm which evaluates the standard deviation against a target deviation. If the measured standard deviation falls below the target deviation, the amplitude of the driver signal and/or the amplification gain may be adjusted in accordance with conditional rules which based on the monitoring define the specific settings communicated by the condition signal, e.g. defining the specific settings of the supply power of the amplifier and/or the specific settings to control the amplifier gain.

In an embodiment, the time between consecutive measurements of the flowmeter may be adjusted or changed. In a typical measuring setup, a measurement is performed with pre-set time spacing, e.g. one measurement pr. microsecond. Based on the processed signal or value this time spacing may be adjusted. For example, in a situation where a sufficient precision is achieved, it may be possible increase the time spacing. By increasing the time spacing the achieved precision may be lowered. However, in a situation where a low energy consumption is preferred as long as a given precision is obtained, it may be advantageous to perform fewer measurements.

In a further embodiment, such parameters as time between consecutive measurements of the flowmeter, the supply power setting and the amplifier gain may be controlled by a control algorithm which in accordance with preset criteria optimizes one or more parameters in accordance a target, such as a desired precision or target energy consumption, or other targets.

FIG. 4 illustrates a schematic circuit diagram of central components of an embodiment of the receiver circuit. The components are positioned between the receiver input 38 and the receiver output 39. The figure illustrates a receiving amplifier 41, which at an input thereof is connected to the receiver input 38, and which at an output thereof is connected to the receiver output 39. The receiver amplifier is connected at the other input to a reference voltage 42. The input of the receiving amplifier and the output of the receiving amplifier are connected by a feedback connection 43.

The feedback connection 43 comprises a first impedance in series, labeled as R2, and at least one parallel connection 44 across the first impedance R2. The parallel connection 44 comprises a second impedance, labeled as R3 and an amplifier switch S3. The second impedance and the amplifier switch are connected in series. The amplifier switch is operable to couple in and out the impedance R3 so as to change the amplification gain of the receiving circuit. Typically, the impedances are implemented by resistors, however other impedance components, such as capacitors, may be present to adjust or control the effective impedances felt by transient signals.

As is known to the skilled person, the feedback loop 43 changes the amplification gain of the receiver amplifier 41, by operating the switch S3, e.g. by means of a control signal 40, the impedance of the feedback loop changes from Z_{feedback}=R2 with open switch to Z_{feedback}=(1/R2 + 1/R3)⁻¹ with the switch closed, and thereby the amplifier gain changes.

In an embodiment, the amplifier switch S3 is operable to be closed during driving the ultrasonic transducers and open during reception of signal from the ultrasonic transducers. The control signal 40 to operate the signal may thus be connected to the generator ASIC in order to receive a control signal which is synchronous with the driving of the ultrasonic transducers.

It is important that the total impedance seen from the transducer, i.e. the impedance at the receiver input 38 is kept constant, or at least only varies to a very small degree between generation and reception of the ultrasonic transducers. In the illustrated diagram, the variation of the impedance at the input 38 can be kept below 1%. As seen from the transducer, this variation can be decreased even further since the transducers 'sees' the entire combination of impedances of the circuit in front of it.

The impedance R4 is not critical for the impedance of the circuit. This specific resistance value is typically selected in order to provide a suitable reference voltage 42, e.g. by voltage division from the supply source to the amplifier 41.

The resistors R1 and R2 may in embodiments be selected within the range of 1 to 40 kΩ. For smaller values the power consumption is larger, whereas for higher values the noise generation is larger. Thus the specific value may be selected as a compromise between these two factors. The resistor R2 may be selected in accordance with a desired gain. In a specific embodiment, R1 and R2 may both be selected with a value of 6.8 kΩ, and R3 may be selected with a value of 2.2 kΩ. FIG. 5 schematically illustrates alternative embodiments of the feedback connection 43 of FIG. 4.

FIG. 5A schematically illustrates an embodiment wherein the feedback connection 44 comprising a variable impedance 50 in series. Current available variable impedances are hampered by a lack of linearity. However, if a variable impedance with a high linearity can be provided it is a very efficient way of providing variable gain which is not limited to specific resistor component used in the circuit. A variable impedance may e.g. be provided as a digital potentiometer.

FIG. 5B schematically illustrates an embodiment which is similar to the one of FIG. 5A, except that there is a switch 51 in series with the variable resistor 50. By applying a switch, a faster response is envisioned instead of turning on/off the variable impedance 50.

FIG. 5C illustrates an embodiment which comprises a plurality of feedback connections branches, each with a resistor 52'-52"' and a switch 51'-51"' in series. The switches are individually controllable. The resistor values may be selected in accordance with a desired output gain. This embodiment enables a large flexibility in the amplifier gain which still ensures a high linearity in the total resistance of the feedback complex, since each branch of the feedback loop can be provided with components which have a high degree of linearity.

FIG. 6 illustrates an embodiment of important components of an ultrasonic flowmeter in accordance with embodiments of the present invention. The figure is similar to FIG. 3 in the sense, that it illustrates components connected between the driver ASIC 30 and the receiver ASIC 31. The generator circuit is illustrated to comprise a driver amplifier 60 and a resistor 61. Other components are present in a working implementation; however these components are the main component. The driver amplifier 60 may output a voltage between 3 and 18 volts, a typical initial setting is 12 volts. The resistor value may be selected in accordance with the output impedance of the driver amplifier 60 and the impedances of the transducer circuitry 62. In an embodiment, the resistor value of the resistor 61 is 500 Ω, such as in the interval 100 Ω to 1 kΩ.

The generator is connected via the signal path 306 to the receiver circuit. Embodiments of the receiver circuit have been disclosed in connection with FIGS. 4 and 5. The receiver circuit is in the illustrated embodiment terminated by a resistor 65 for defining or at least rendering substantial constant the input impedance of the receiver circuit. In an embodiment, the resistor value of the resistor 65 is 6.8 kΩ, such as in the interval 1 kΩ to 10 kΩ.

The ultrasonic transducers T1 and T2 form part of a transducer circuit 62 which comprises the switches S1 and S2 for alternating connection of the ultrasonic transducers to the signal path.

In embodiments, the processing means implements rules for controlling the amplitude of the drive signals and the specific selection of the amplification gain.

In an embodiment, the generator circuit is adapted to output drive signals with fixed amplitude and the amplification gain may be changed between two levels. The fixed amplitude may be selected to be sufficiently large to be able to penetrate a coating layer of a given thickness. In such an embodiment, the expected life time of the flowmeter may be prolonged since it can operate until the coating thickness has exceeded a certain thickness.

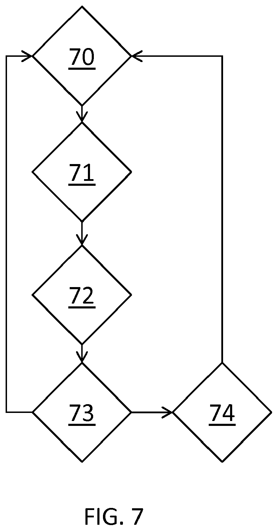

FIG. 7 schematically illustrates a flow diagram which shows general steps, which in an embodiment, may be performed in connection with a determination of the flow rate. The operational principle is explained with reference to FIG. 6 in combination with reference to FIG. 7.

In a first step 70, the transducer T1 generates ultrasonic signals. This is achieved by closing the switch S1 so that T1 is electrically connected to the signal path 306, and opening the switch S2 so that T2 is disconnected from the signal path. The switch S3 is closed so that the amplification gain is defined by the parallel connected resistors.

In a next step 71 a number of pulses are generated by the ASIC 30. The generated pulses are amplified by the driver amplifier 60, e.g. to 12 volts.

In a next step 72, the transducer T2 detects the ultrasonic signals. This is achieved by opening the switch S1 so that T1 is disconnected from the signal path 63, and closing the switch S2 so that T2 is connected to the signal path. The switch S3 is opened so that the receiving ASIC 31 receives the maximal signal from the transducer T2.

The steps are repeated 73 with the switching of S1 and S2 reversed, so that the transducer T2 acts as driver and transducer T1 as receiver.

The entire number of steps is repeated for each measurement. In other embodiments, a number of measurements are first conducted in one direction and then the same number of measurements is conducted in the opposite direction.

The phase difference (or time difference) between the two signal directions is determined 74 so as to calculate a flow rate.

In other embodiments, the performance of the flowmeter is monitored. In an example embodiment, the flowmeter starts by operating with a given amplitude of the driving signal, and with a given amplifier gain of the receiver amplifier.

By monitoring the measurement result, e.g. by detecting the scatting of the flow rate measurements, it is continuously verified whether or not the amplitude of the driving signal is sufficient. In the event it is detected that the scattering of the flow rate measurements becomes too large, the amplitude of the driving signal may be increased by increasing the supply voltage of the driving amplifier until the scattering of the flow rate measurements is decreased to an acceptable level. If the amplitude of the driving signal becomes so large that the receiver electronics risk saturation, the gain of the receiving amplifier may be increase by coupling in an impedance component (a resistor) in accordance with embodiments of the present invention. In the event a number of resistors are coupled in, each switch may be operated to be closed during driving of the ultrasonic transducers and open during reception of signal from the ultrasonic transducers as disclosed in connection with FIG. 7.

## Claims

1. Ultrasonic flowmeter comprising:
- at least two ultrasonic transducers (35) arranged for transmission and receipt of ultrasonic signals in opposite directions across a measuring distance;
- a generator circuit (32) for generating drive signals (33) to the at least two ultrasonic transducers (35), the generator circuit having a generator output (34);
- a receiver circuit (36) for receiving signals (37) from the at least two ultrasonic transducers, the receiver circuit having a receiver input (38) and a receiver output (39); and
- at least two transducer switches (S1, S2) being operable for alternating connection of the ultrasonic transducers to the signal path;
wherein the receiver circuit comprises a receiving amplifier (41) positioned between the receiver input and the receiver output, so that the receiver input is connected to the input of the receiving amplifier and the output of the receiving amplifier is connected to the receiver output;
**characterized in that**
the generator output being connected to the receiver input by an electric signal path (306) and the input of the receiving amplifier and the output of the receiving amplifier are connected by a feedback connection (43), the feedback connection comprising a first impedance in series (R2); the feedback connection further comprises at least one parallel connection (44) across the first impedance, the at least one parallel connection comprises a second impedance (R3, 50, 51) and an amplifier switch (S3, 51) in series with the second impedance, the amplifier switch being operable to couple in and out the second impedance so as to change the amplification gain of the receiving circuit where the amplifier switch is configured to be closed during driving of the ultrasonic transducers and to be opened during reception of signals from the ultrasonic transducers.

2. The ultrasonic flowmeter according to claim 1, wherein the generator circuit is adapted for generating drive signals with variable amplitude.

3. The ultrasonic flowmeter according to claim 1 or 2 further comprising means (303) for determining a condition signal indicative of an operation condition, and wherein the generator circuit is adapted for generating drive signals with variable amplitude or the receiver circuit is adapted to change the amplification gain of the receiving circuit in response to the condition signal.

4. The ultrasonic flowmeter according to any the claims 2-3, wherein the generator circuit comprises an amplifier (60), and wherein the generator circuit is adapted for generating drive signals with variable amplitude by varying the power supplied to the amplifier.

5. The ultrasonic flowmeter according to any of the preceding claims, wherein the input of the receiving amplifier and the output of the receiving amplifier are connected by a feedback connection, the feedback connection comprises a variable impedance in series (50).

6. The ultrasonic flowmeter according to claim 5, wherein the at least one parallel connection comprises two or more parallel connections, each parallel connection comprising an individually controllable amplifier switch (51) to couple in and out the impedance of the parallel connection.

7. The ultrasonic flowmeter according claim 3, wherein the signals from at least two ultrasonic transducers are monitored at a position on the signal path prior to the receiver input and wherein the condition signal is based on the monitored signal or a signal or value derived from the monitored signal.

8. The ultrasonic flowmeter according to claim 3, the ultrasonic flowmeter further comprising processing means for processing signals received from the receiver output to a processed signal or value, and wherein the condition signal is based on the processed signal or value.

9. The ultrasonic flowmeter according to claim 8, wherein the processed signal or value is based on a statistical analysis of the signal received from the receiver output.

10. The ultrasonic flowmeter according to any of the preceding claims, the ultrasonic flowmeter further comprising processing means for processing signals received from the receiver output to a processed signal or value, and wherein a time between consecutive measurements of the flowmeter is based on the processed signal or value.

11. A consumption meter for measuring a medium flow through a flow passage, the consumption meter comprising an ultrasonic flowmeter according to any of the preceding claims and a flow passage, the consumption meter being connected to the flow passage.

12. A method of operating an ultrasonic flowmeter according to one of the preceding claims,
wherein the method comprises operating the amplifier switch to couple in and out the second impedance so as to change the amplification gain of the receiving circuit where the amplifier switch is operated to be closed during driving of the ultrasonic transducers and to be opened during reception of signals from the ultrasonic transducers.

13. The method according to claims 12, wherein the generator circuit further comprises an amplifier, and wherein the method comprises:
- vary the power supplied to the amplifier to generate drive signals with variable amplitude.

## Patentansprüche

1. Ultraschalldurchflussmesser, umfassend:
- zumindest zwei Ultraschallwandler (35), die zur Übertragung und zum Empfang von Ultraschallsignalen in entgegengesetzten Richtungen über eine Messdistanz hinweg angeordnet sind;
- einen Generatorkreis (32) zum Erzeugen von Antriebssignalen (33) für die zumindest zwei Ultraschallwandler (35), wobei der Generatorkreis einen Generatorausgang (34) aufweist;
- einen Empfängerkreis (36) zum Empfangen von Signalen (37) von den zumindest zwei Ultraschallwandlern, wobei der Empfängerkreis einen Empfängereingang (38) und einen Empfängerausgang (39) aufweist; und
- zumindest zwei Wandlerschalter (S1, S2), die zum Alternieren von Verbindung der Ultraschallwandler zum Signalweg betriebsfähig sind;
wobei der Empfängerkreis einen Empfangsverstärker (41) umfasst, der derart zwischen dem Empfängereingang und dem Empfängerausgang angeordnet ist, dass der Empfängereingang mit dem Eingang des Empfangsverstärkers verbunden ist und der Ausgang des Empfangsverstärkers mit dem Empfängerausgang verbunden ist;
**dadurch gekennzeichnet, dass**
der Generatorausgang mit dem Empfängereingang durch einen elektrischen Signalweg (306) verbunden ist und der Eingang des Empfangsverstärkers und der Ausgang des Empfangsverstärkers durch eine Rückkopplungsleitung (43) verbunden sind, wobei die Rückkopplungsverbindung eine erste Impedanz in Reihe (R2) umfasst; wobei die Rückkopplungsverbindung ferner zumindest eine Parallelverbindung (44) über die erste Impedanz hinweg umfasst, wobei die zumindest eine Parallelverbindung eine zweite Impedanz (R3, 50, 51) und einen Verstärkerschalter (S3, 51) in Reihe mit der zweiten Impedanz umfasst, wobei der Verstärkerschalter zum Ein- und Auskoppeln der zweiten Impedanz zum Ändern des Verstärkungsfaktors des Empfangskreises betriebsfähig ist, wobei der Verstärkerschalter dazu konfiguriert ist, während des Antreibens der Ultraschallwandler geschlossen zu werden und während Empfangs von Signalen von den Ultraschallwandlern geöffnet zu werden.

2. Ultraschalldurchflussmesser nach Anspruch 1, wobei der Generatorkreis zum Erzeugen von Antriebssignalen mit variabler Amplitude geeignet ist.

3. Ultraschalldurchflussmesser nach Anspruch 1 oder 2, ferner umfassend Mittel (303) zum Bestimmen eines Zustandssignals, das einen Betriebszustand anzeigt, und wobei der Generatorkreis zum Erzeugen von Antriebssignalen mit variabler Amplitude geeignet ist oder der Empfängerkreis zum Ändern des Verstärkungsfaktors des Empfangskreises in Reaktion auf das Zustandssignal geeignet ist.

4. Ultraschalldurchflussmesser nach einem der Ansprüche 2 bis 3, wobei der Generatorkreis einen Verstärker (60) umfasst, und wobei der Generatorkreis zum Erzeugen von Antriebssignalen mit variabler Amplitude durch Variieren der Leistung, die dem Verstärker zugeführt wird, geeignet ist.

5. Ultraschalldurchflussmesser nach einem der vorhergehenden Ansprüche, wobei der Eingang des Empfangsverstärkers und der Ausgang des Empfangsverstärkers durch eine Rückkopplungsverbindung verbunden sind, wobei die Rückkopplungsverbindung eine variable Impedanz in Reihe (50) umfasst.

6. Ultraschalldurchflussmesser nach Anspruch 5, wobei die zumindest eine Parallelverbindung zwei oder mehr Parallelverbindungen umfasst, wobei jede Parallelverbindung einen individuell steuerbaren Verstärkerschalter (51) zum Ein- und Auskoppeln der Impedanz der Parallelverbindung umfasst.

7. Ultraschalldurchflussmesser nach Anspruch 3, wobei die Signale von zumindest zwei Ultraschallwandlern an einer Position auf dem Signalweg vor dem Empfängereingang überwacht werden, und wobei das Zustandssignal auf dem überwachten Signal oder einem Signal oder Wert basiert, das/der aus dem überwachten Signal abgeleitet wird.

8. Ultraschalldurchflussmesser nach Anspruch 3, wobei der Ultraschalldurchflussmesser ferner Verarbeitungsmittel zum Verarbeiten von Signalen, die vom Empfängerausgang empfangen werden, zu einem verarbeiteten Signal oder Wert umfasst, und wobei das Zustandssignal auf dem verarbeiteten Signal oder Wert basiert.

9. Ultraschalldurchflussmesser nach Anspruch 8, wobei das/der verarbeitete Signal oder Wert auf einer statistischen Analyse des Signals, das vom Empfängerausgang empfangen wird, basiert.

10. Ultraschalldurchflussmesser nach einem der vorhergehenden Ansprüche, wobei der Ultraschalldurchflussmesser ferner Verarbeitungsmittel zum Verarbeiten von Signalen, die vom Empfängerausgang empfangen werden, zu einem verarbeiteten Signal oder Wert umfasst, und wobei eine Zeit zwischen aufeinanderfolgenden Messungen des Durchflussmessers auf dem verarbeiteten Signal oder Wert basiert.

11. Verbrauchsmesser zum Messen einer Mediumströmung durch einen Strömungsdurchgang, der Verbrauchsmesser umfassend einen Ultraschalldurchflussmesser nach einem der vorhergehenden Ansprüche und einen Strömungsdurchgang, wobei der Verbrauchsmesser mit dem Strömungsdurchgang verbunden ist.

12. Verfahren zum Betreiben eines Ultraschalldurchflussmessers nach einem der vorhergehenden Ansprüche:
wobei das Verfahren Betreiben des Verstärkerschalters zum Ein- und Auskoppeln der zweiten Impedanz zum Ändern des Verstärkungsfaktors des Empfangskreises umfasst, wobei der Verstärkerschalter dazu betrieben wird, während des Antreibens der Ultraschallwandler geschlossen zu werden und während Empfangs von Signalen von den Ultraschallwandlern geöffnet zu werden.

13. Verfahren nach Anspruch 12, wobei der Generatorkreis ferner einen Verstärker umfasst, und wobei das Verfahren umfasst:
- Variieren der Leistung, die dem Verstärker zugeführt wird, zum Erzeugen von Antriebssignalen mit variabler Amplitude.

## Revendications

1. Débitmètre ultrasonique comprenant :
- au moins deux transducteurs ultrasoniques (35) conçus pour transmettre et recevoir des signaux ultrasoniques dans des sens opposés en travers d'une distance de mesure ;
- un circuit générateur (32) pour générer des signaux d'entraînement (33) vers les au moins deux transducteurs ultrasoniques (35), le circuit générateur ayant une sortie de générateur (34) ;
- un circuit récepteur (36) pour recevoir des signaux (37) en provenance des au moins deux transducteurs ultrasoniques, le circuit récepteur ayant une entrée de récepteur (38) et une sortie de récepteur (39) ; et
- au moins deux interrupteurs de transducteurs (S1,S2) étant actionnables pour alterner la connexion des transducteurs ultrasoniques vers le parcours de signaux ;
le circuit récepteur comprenant un amplificateur de réception (41) positionné entre l'entrée de récepteur et la sortie de récepteur, de sorte que l'entrée de récepteur est connectée à l'entrée de l'amplificateur de réception et que la sortie de l'amplificateur de réception est connectée à la sortie de récepteur ; **caractérisé en ce que**
la sortie de générateur est connectée à l'entrée de récepteur par un parcours de signaux électriques (306) et que l'entrée de l'amplificateur de réception et la sortie de l'amplificateur de réception sont connectées par une connexion de rétroaction (43), la connexion de rétroaction comprenant une première impédance en série (R2) ; la connexion de rétroaction comprenant en outre au moins une connexion parallèle (44) à travers la première impédance, l'au moins une connexion parallèle comprenant une seconde impédance (R3, 50, 51) et un interrupteur d'amplificateur (S3, 51) en série avec la seconde impédance, l'interrupteur d'amplificateur étant actionnable pour coupler et désaccoupler la seconde impédance de manière à changer le gain d'amplification du circuit récepteur, l'interrupteur d'amplificateur étant conçu pour être fermé pendant l'entraînement des transducteurs ultrasoniques et pour être ouvert pendant la réception des signaux en provenance des transducteurs ultrasoniques.

2. Débitmètre ultrasonique selon la revendication 1, le circuit générateur est apte à générer des signaux d'entraînement à amplitude variable.

3. Débitmètre ultrasonique selon la revendication 1 ou 2, comprenant en outre un moyen (303) pour déterminer un signal de condition indicatif d'une condition de fonctionnement, le circuit générateur étant apte à générer des signaux d'entraînement à amplitude variable ou le circuit récepteur étant apte à modifier le gain d'amplification du circuit récepteur en réaction au signal de condition.

4. Débitmètre ultrasonique selon l'une quelconque des revendications 2 à 3, dans lequel le circuit générateur comprend un amplificateur (60), et le circuit générateur est apte à générer des signaux d'entraînement à amplitude variable en variant le courant fourni à l'amplificateur.

5. Débitmètre ultrasonique selon l'une quelconque des revendications précédentes, dans lequel l'entrée de l'amplificateur de réception et la sortie de l'amplificateur de réception sont connectées par une connexion à rétroaction, la connexion à rétroaction comprenant une impédance variable en série (50).

6. Débitmètre ultrasonique selon la revendication 5, dans lequel l'au moins une connexion parallèle comprend deux connexions parallèles ou plus, chaque connexion parallèle comprenant un interrupteur d'amplificateur contrôlable individuellement (51) pour coupler et désaccoupler l'impédance de la connexion parallèle.

7. Débitmètre ultrasonique selon la revendication 3, dans lequel les signaux provenant d'au moins deux transducteurs ultrasoniques sont contrôlés à une position du parcours de signaux avant l'entrée de récepteur et le signal de conditions est basé sur le signal contrôlé ou un signal ou une valeur dérivé du signal contrôlé.

8. Débitmètre ultrasonique selon la revendication 3, le débitmètre ultrasonique comprenant en outre un moyen de traitement pour traiter des signaux reçus de la part de la sortie de récepteur pour obtenir un signal ou une valeur traité, le signal de conditions étant basé sur le signal ou la valeur traitée.

9. Débitmètre ultrasonique selon la revendication 8, dans lequel le signal ou la valeur traité est basé sur une analyse statistique du signal reçu en provenance de la sortie de récepteur.

10. Débitmètre ultrasonique selon l'une quelconque des revendications précédentes, le débitmètre ultrasonique comprenant en outre un moyen de traitement pour traiter les signaux reçus de la part de la sortie de récepteur pour obtenir un signal ou une valeur traité, et une durée entre des mesures consécutives du débitmètre est basée sur le signal ou la valeur traitée.

11. Mesureur de consommation pour mesurer un flux de fluide à travers un passage d'écoulement, le mesureur de consommation comprenant un débitmètre ultrasonique selon l'une quelconque des revendications précédentes et un passage d'écoulement, le mesureur de consommation étant connecté au passage d'écoulement.

12. Procédé d'utilisation d'un débitmètre ultrasonique, ce procédé comprenant l'actionnement de l'interrupteur d'amplificateur pour coupler et désaccoupler la seconde impédance de manière à modifier le gain d'amplification du circuit récepteur, l'interrupteur d'amplificateur étant actionné pour être fermé pendant l'entraînement des transducteurs ultrasoniques et pour être ouvert pendant la réception de signaux en provenance des transducteurs ultrasoniques.

13. Procédé selon la revendication 12, dans lequel le circuit générateur comprend en outre un amplificateur, et le procédé comprend :
- la variation du courant fourni par un amplificateur pour générer des signaux d'entraînement à amplitude variable.
